# EUROPÄISCHE PATENTANMELDUNG

(11) **EP 1 929 856 A1**
(43) Veröffentlichungstag der Anmeldung: **11.06.2008**
(21) Anmeldenummer: 07023324.2
(22) Anmeldetag: 01.12.2007
(51) Int. Cl.: A01D 78/10

(54) **Heuwerbungsmaschine**

(30) Priorität: 07.12.2006 DE 102006058053
(71) Anmelder: CLAAS Saulgau GmbH, 88348 Bad Saulgau (DE)
(72) Erfinder: Deni, Franz, 88348 Bad Saulgau (DE)

(57) **Zusammenfassung**

Die Erfindung bezieht sich auf eine Anordnung von seitlichen Kreiselrechen einer Heuwerbungsmaschine, die von einer breiten Arbeitsstellung in eine die Maschinenbreite verringernde Transportstellung schwenkbar ist. Das wesentliche Merkmal der Erfindung besteht darin, dass die dem mittleren Querträger seitlich angeordneten Kreiselrechen aus wenigstens fünf weitern Kreiselrechen bestehen und die zugehörigen seitlichen Tragarme für den Transport nach oben schwenkend und von außen nach innen spiralförmig eingerollt werden.

## Beschreibung

Die Erfindung bezieht sich auf Verfahren und Vorrichtungen zum Schwenken von Kreiselrecharmen für Heuwerbungsmaschinen, die von einem Traktor angetrieben werden und von einer breiten Arbeitsstellung in eine schmale Transportstellung veränderbar sind, nach dem Oberbegriff der Patentansprüche 1 und 3.

### Stand der Technik

Derartige Arbeitsmaschinen sind bereits, je nach Kreiselanzahl, in verschiedenen Ausführungen und unterschiedlichen Antriebsvarianten bekannt.

So ist beispielweise in EP 0 772 962 B1 eine Heuwerbungsmaschine mit 8 drehbaren Kreiselrechen beschrieben, die über einen Tragrahmen mit der Zweipunkt- Hubvorrichtung eines Traktors gekoppelt ist. Dabei sind an einem Mittelträger mit 2 Kreiselrechen mehrere miteinander gelenkig verbundene Seitenträger für weitere Kreiselrechen angelenkt, wobei jedem Seitenträger ein Kreiselrechen zugeordnet ist und die Seitenträger von der breiten Arbeitsstellung in eine die Maschinenbreite verringende Transportstellung schwenkbar sind. Die seitlich angeordneten Kreiselrechen werden vor dem Schwenken der Seitenträger in die Transportstellung nach oben verschwenkt.

Aus der EP 0 960 559 B1 ist weiterhin eine vom Traktor angetriebene Heuwerbungsmaschine mit 8 Kreiselrechen bekannt, wobei dem Mittelträger mit 2 Kreiselrechen mehrere miteinander gelenkig verbundene Kreiselrechen zugeordnet sind und diese Kreiselrechen von der breiten Arbeitsstellung in eine die Maschinenbreite verringernde Transportstellung geschwenkt werden. Nachteil hierbei ist jedoch die erschwerte systematische Erweiterung auf 10, 12, 14 oder mehr Kreiselrechen.

In der EP 0 664 948 A1 ist eine Heuwerbungsmaschine mit 10 Kreiselrechen dargestellt, bei der die Kreiselrechen auf 2 parallel und quer zur Fahrtrichtung verlaufende Kreiselrechreihen ungleich verteilt sind. Die 6 hinter dem Traktor angeordneten Kreiselrechen gehören zum Stand der Technik einer auf dem Heumaschinenmarkt bekannten Heuwerbungsmaschine. Zwecks Überdeckung der Arbeitsbreite werden von den 4 im Frontbereich angeordneten Kreiselrechen je 2 Kreiselrechen links und 2 Kreiselrechen rechts weit außen positioniert. Die weit außen positionierten Kreiselrechen werden von der Front-Hubvorrichtung über lange Auslegerarme in diese Position geschwenkt. Der Antrieb erfolgt über die Front-Antriebswelle. Neben dem großen Aufwand dieser Ausführung kommt durch den großen Abstand zwischen den im Front und den im Heck arbeitenden Kreiselrechen in der Kurvenfahrt eine schlechte Überdeckung zustande, so dass unbehandeltes Erntegut am Boden liegen bleibt.

### Aufgabenstellung

Die Aufgabe der Erfindung ist es, für eine Heuwerbungsmaschine mit großen Arbeitsbreien über das bekannte Maß hinaus ein ausbaufähiges und offenes System zur Überführung der Kreiselrechen aus ihrer Arbeitsstellung in eine kompakte Transportlage vorzuschlagen, so dass die Möglichkeit besteht, mit einem geringen technischen Aufwand die Anzahl der Kreiselrechen bei Bedarf fortlaufend erhöhen zu können.

### Lösung der Aufgabe

Gelöst wird die Aufgabe der Erfindung mit den kennzeichnenden Merkmalen der unabhängigen Anspruchs 1 und 3. Weitere vorteilhafte Ausgestaltungen der Erfindung sind den abhängigen Ansprüchen, der Beschreibung und den Figurendarstellungen zu entnehmen.

Die Erfindung sieht dabei vor, an einem mittleren Querträger mit zwei Kreiselrechen seitlich mindestens weitere 5 Kreiselrecharme anzuordnen und diese aus einer breiten Arbeitsstellung von außen zur Mitte auf die inneren seitlich angeordneten Kreiseltragarme spiralförmig nach oben einzurollen bzw. zu verschwenken und diese inneren Kreiseltragarme anschließend um die am Querträger angebrachten Schwenklager mit aufrechten etwa vertikal ausgerichteten Drehachsen in eine die Maschinenbreite verringernde Transportbreite zu schwenken.

Beim Schwenken der Kreiseltragarme von der Transportstellung in die Arbeitsstellung werden umgekehrt zuerst die inneren seitlichen Kreiseltragarme um die am Querträger angebrachten Schwenklager mit aufrechten etwa vertikal ausgerichteten Drehachsen in die Arbeitsposition geschwenkt und danach werden die seitlichen sich noch in einer Spirale befindlichen Kreiseltragarmen mit ihren Rechkreiseln rückwärts von innen nach außen in die gestreckte Arbeitsstellung zurück. geschwenkt.

Der große Vorteil des spiralförmigen Ein- bzw. Ausschwenkens von seitlich angeordneten Kreiselrecharmen ist es, dass das Grundkonzept bekannter Heuwerbungsmaschine prinzipiell beibehalten werden kann, dabei aber die Anzahl der Kreiselrechen mit geringen technischen Aufwand fortlaufend auf zwölf und mehr erhöht werden kann.

### Ausführungsbeispiel

Ein Ausführungsbeispiel der Erfindung ist in den Zeichnungen dargestellt und wird anhand nachfolgend Figurendarstellungen näher erleitet.

Es zeigen:
- Fig. 1: eine schematische Darstellung einer 12 Kreisel-Heuwerbungsmaschine in der Draufsicht und in der Arbeitsstellung.
- Fig. 2: die Rückansicht, wobei die in Fahrtrichtung gesehene linke Seite die Arbeitsstellung und die rechte Seite die nach oben geschwenkten bzw. eingerollten seitlichen Kreiselrecharme zur Vorbereitung in die endgültige Transportstellung teilweise eingerollt sind
- Fig.3: eine Heuwerbungsmaschine in der Seitenansicht der Transportstellung
- Fig. 4: die schematische Draufsicht gemäß der Fig. 3

Fig. 5, 6, 7, 8, und 9 zeigen die einzelnen Schwenkabläufe der Seitenarme.

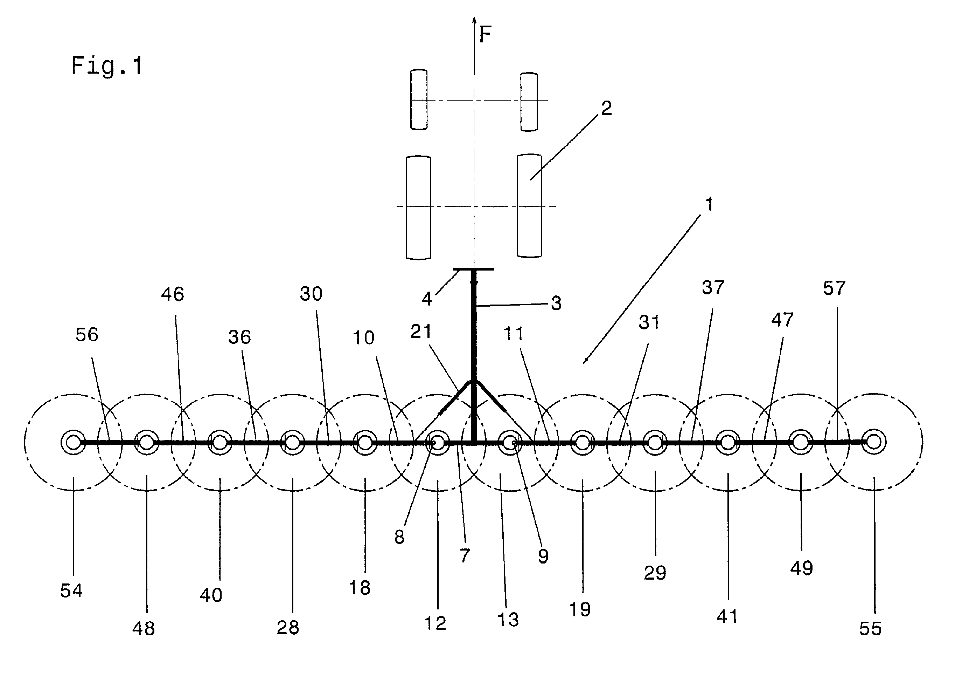

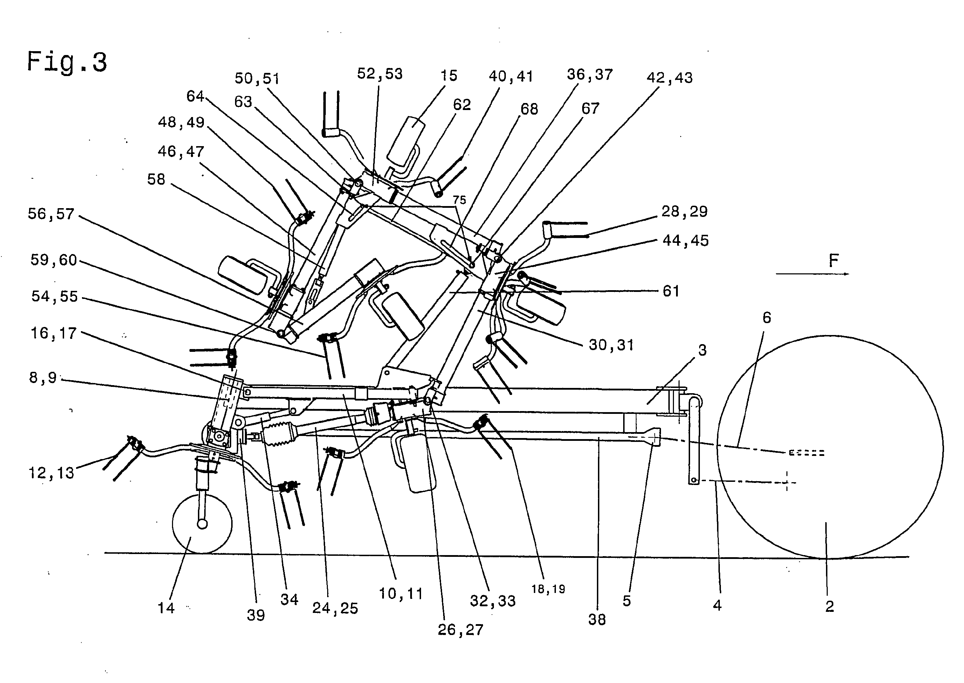

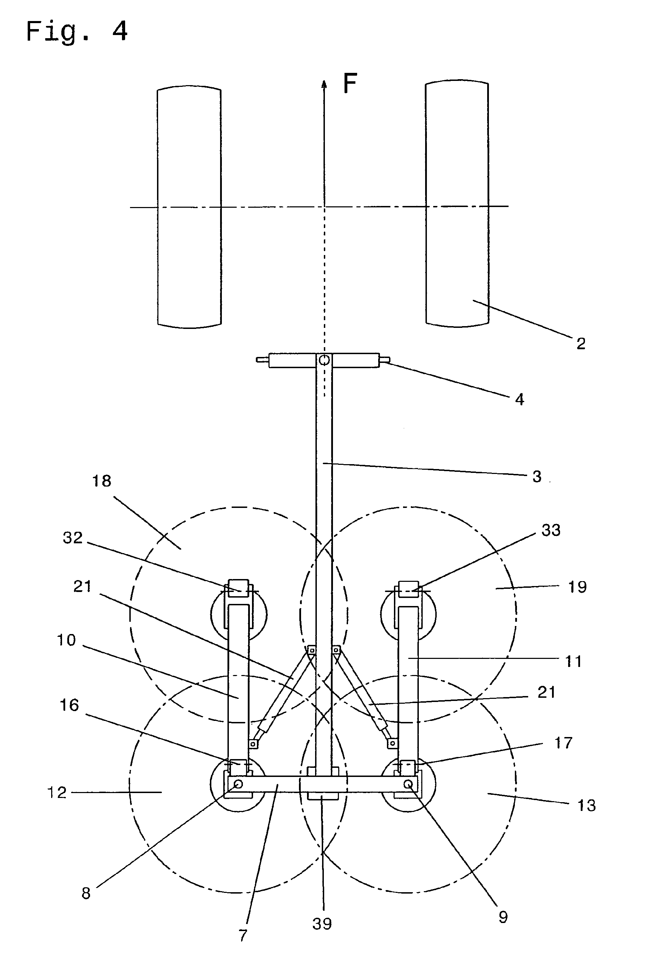

Der in den Figuren 1 bis 9 dargestellte Kreiselheuwender (1) wird von einem Traktor (2) gezogen und angetrieben. An einem in Fahrtrichtung (F) verlaufenden starren Längsträger (3) ist an der Vorderseite eine Zweipunktanhängung (4) und ein Anschluss (5) für eine Gelenkwelle (6)
zum Getriebe des Traktors (2) angeordnet. Am hinteren Ende des Längsträgers (3) ist ein Querträger (7) angeordnet. An den Querträger (7) schließen sich beidseitig mehrere um etwa vertikale Schwenkachsen (8, 9) nach vorne schwenkbare Seitenträger (10, 11) mit daran angeordneten Kreiselrechen (18, 19) an. Am Querträger (7) sind zwei mittlere Kreiselrechen (12, 13) angeordnet. Der Antrieb der einzelnen Kreiselrechen erfolgt vom Traktor (2) aus über die Gelenkwelle (6). Von dieser aus erfolgt die Weiterleitung der Drehbewegung über eine unterhalb des Längsträgers (3) angeordnete Antriebswelle (38) zum Eingangsgetriebe (39) am Querträger (7). An das Eingangsgetriebe (39) schließen sich beidseitig innerhalb des Querträgers (7) verlaufende Wellen an, die zu den Kreiselgetrieben (22, 23) der starr miteinander verbundenen Kreiselrechen (12, 13) führen. Unter den beiden mittleren Kreiselrechen sind zwei Arbeits- bzw. Transporträder (14) angeordnet, die für den Transport höhenverstellbar sind (siehe Fig. 3). Unter den anderen Kreiselrechen sind Tasträder (15) angeordnet.

Unterhalb der Seitenträger (10, 11) verlaufen Gelenkwellen (24, 25), welche die Drehbewegung von den Kreiselgetrieben (22, 23) der mittleren Kreiselrechen (12, 13) zu den Kreiselgetrieben (26, 27) der Seitenträger (10, 11) übertragen. Die Seitenträger (10, 11) sind am Querträger (7) angebrachte horizontale Schwenkachsen (16, 17), nach oben und unten schwenkbar. An die Seitenträger (10, 11) schließen sich die zweiten seitlichen Kreiselrechen (28, 29) an, die an zweiten seitlichen Tragarmen (30, 31) befestigt und über horizontal angeordnete Schwenkachsen (32, 33) mit den Kreiselgetrieben (26, 27) der Seitenträger (10, 11) antriebsgemäß verbunden sind. Die dritten seitlichen Tragarme (36, 37) sind mit daran angeordneten Kreiselrechen (40, 41) antriebsgemäß und über den horizontal angeordneten Schwenkachsen (42, 43) an Kreiselgetrieben (44, 45) der zweiten Tragarme (36, 37) verbunden. Die vierten seitlichen Tragarme (46, 47) sind mit daran angeordneten Kreiselrechen (48, 49) antriebsgemäß und über den horizontal angeordneten Schwenkachsen (50, 51)an Kreiselgetrieben (52, 53) der dritten Tragarme (36, 37) verbunden. Die sich gelenkig daran anschließenden äußeren Kreiselrechen (54, 55) sind an äußeren Tragarmen (56, 57) angeordnet. Zwischen den vierten seitlichen Tragarmen (46, 47) und dem äußeren Tragarmen (56, 57) sind Hydraulikzylinder (58) angeordnet, mit denen das Schwenken der äußeren Kreiselrechen (54, 55) um die zugeordneten horizontalen Schwenkachsen (59, 60) erfolgt.

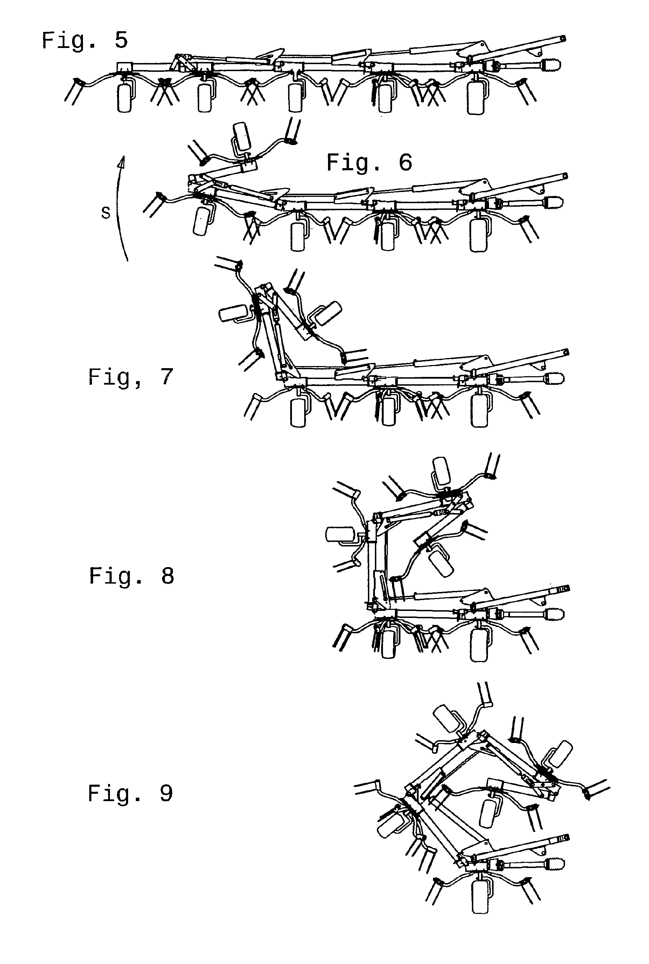

Die Reihenfolge des Einrollens bzw. Schwenkens der seitlichen Tragarme (30, 31, 36, 37, 46, 47) und äußeren Tragarme (56, 57) auf die Seitenträger (10, 11) von der Arbeits- in die Transportstellung wird in den Figuren 5 bis 9 gesondert schematisch dargestellt.

Zuerst werden die äußeren Tragarme (56, 57) durch an den Tragarmen (46, 47) angeordneten doppelwirkenden Hydraulikzylindern (58) um die Schwenkachsen (59, 60) aus der Arbeitsposition Figur 5 in die Position Figur 6 geschwenkt.

Das weitere fortlaufende Schwenken der seitlichen Tragarme (46, 47, 36, 37, 30, 31) von außen nach innen mit den bereits zuvor auf die vierten Tragarme (46, 47) aufgesattelten Außenkreiselrechen (54, 55) wird komplett von an den Seitenträgern (10, 11) angeordneten doppelwirkenden Hydraulikzylindern (61) und daran gelenkig angeordneten Koppelstangen (62) erzeugt. Zunächst werden durch das Ziehen der Hydraulikzylinder (61) und der daran angekoppelten Koppelstangen (62), welche mit Bolzen (63) die Führungsschlitze (64) an den Tragarmen (46, 47) durchsetzen, die Tragarme (46, 47) um die Schwenkachsen (50, 51) aus der Position Fig. 6 in die Position Fig. 7. geschwenkt. Die Schwenkvorgänge werden durch die Anschlagflächen (65) an den Tragarmen (46, 47) und den Anschlagflächen (66) an den Tragarmen (36, 37) begrenzt. Durch die in den Endpositionen der Führungsschlitze (64) zur Maschinenmitte angeordneten Sperrvorrichtungen (20) (siehe EP 0 443 338 B1) werden weitere Verschiebungen der Koppelstangen (62) in Schlitzrichtung verhindert.

Bei weiter ziehenden Hydraulikzylindern (61) und an den kolbenseitig angebrachten Bolzen (67) welche die Führungsschlitze (68) an den Tragarmen (36, 37) durchsetzen, werden die Tragarme (36, 37) um die Schwenkachsen (42, 43) aus der Position Fig. 7 in die Position Fig. 8 verschwenkt. Die Schwenkvorgänge werden durch die Anschlagflächen (69) an den Tragarmen (36, 37) und an den Anschlagflächen (70) an den Tragarmen (30, 31) begrenzt. Durch die in der Endposition der Führungsschlitze (68) zur Maschinenmitte angeordneten Sperrvorrichtungen (20) werden weitere Verschiebungen der Hydraulikzylinder in Schlitzrichtung verhindert.

Durch den verbleibenden Resthub in den Hydraulikzylindern (61) werden die Tragarme (30, 31) um die Schwenkachse (32, 33) aus der Position Fig. 8 in die Position Fig. 9 verschwenkt. Die Endposition wird zusätzlich durch die Anschlagflächen (38) an den Tragarmen (30, 31) und den Anschlagflächen (35) an den Seitenträgern (10, 11) beendet. Die doppelwirkenden Hydraulikzylinder (61) sind hier in ihrer Endstellung.

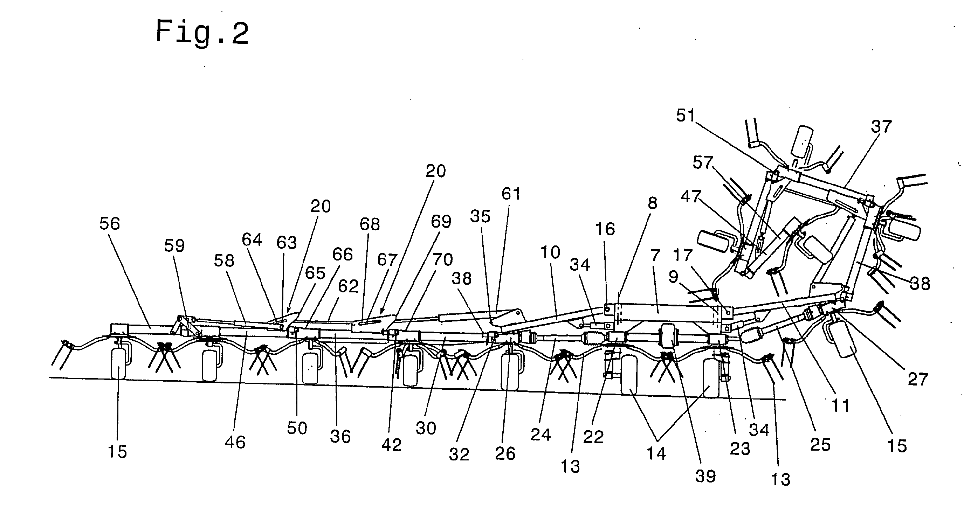

Durch die Hydraulikzylinder (34), welche einerseits an Querträger (7) und anderseits an den Seitenträgern (10, 11) gelenkig angeordnet sind werden diese gemeinsam mit den darauf eingerollten Kreiseltragarmen (30,31,36,37,46,47,56,57,) um die Schwenkachsen (16, 17) für den Transport angehoben.. (Siehe Fig. 2 rechte Seite und Fig. 3.)

Abschließend werden die Seitenträger (10, 11), gemeinsam mit den darauf aufgesattelten seitlichen Kreiseltragarmen (30, 31, 36, 37,46, 47, 56,57) durch die doppelwirkenden Hydraulikzylinder (21), welche einerseits am Längsträger (3) und andererseits an den Seitenträgern (10, 11) gelenkig angekoppelt sind um die vertikal nach vorne neigenden Schwenkachsen (8, 9) in die Transportstellung geschwenkt. Die Überführung der spiralförmig aufgerollten Kreiselrechen in die Arbeitsstellung verläuft in der umgekehrten Reihenfolge, wie die der Überführung in die Transportstellung.
Dem Fachmann ist bekannt und daher kann auf die weitere Beschreibung und Darstellung verzichte werden, dass Heuwerbungsmaschinen dieser Art auch mit hochklappbaren Transportfahrwerken ausgestattet sein können, so dass der Querträger (7) und dessen Kreiselrechen (12,13,18, 19, 28, 29, 40, 41, 48, 49, 54, 55) mittels eines in der Arbeitsstellung hochgeklappten und in der Transportstellung heruntergeklappten Transportfahrwerks zur Überführung der Heuwerbungsmaschine in deren Transportstellung sich gegenüber dem Boden abstützend vom Boden abgehoben werden können.

### Bezugszeichenliste

- 1: Heuwerbungsmaschine
- 2: Traktor
- 3: Längsträger
- 4: Zweipunktanhängung
- 5: Gelenkwellenanschluss
- 6: Gelenkwelle
- 7: Querträger
- 8: Vertikale Schwenkachse links
- 9: Vertikale Schwenkachse rechts
- 10: Seitenträger links
- 11: Seitenträger rechts
- 12: Kreiselrechen
- 13: Kreiselrechen
- 14: Transportrad
- 15: Tastrad
- 16: Schwenkachse
- 17: Schwenkachse
- 18: Kreiselrechen
- 19: Kreiselrechen
- 20: Sperrvorrichtung
- 21: Hydraulikzylinder
- 22: Kreiselgetriebe
- 23: Kreiselgetriebe
- 24: Gelenkwelle
- 25: Gelenkwelle
- 26: Kreiselgetriebe
- 27: Kreiselgetriebe
- 28: Kreiselrechen
- 29: Kreiselrechen
- 30: Tragarm
- 31: Tragarm
- 32: Schwenkachse
- 33: Schwenkachse
- 34: Hydraulikzylinder
- 35: Anschlagfläche
- 36: Tragarm
- 37: Tragarm
- 38: Anschlagfläche
- 39: Eingangsgetriebe
- 40: Kreiselrechen
- 41: Kreiselrechen
- 42: Schwenkachse
- 43: Schwenkachse
- 44: Kreiselgetriebe
- 45: Kreiselgetriebe
- 46: Tragarm
- 47: Tragarm
- 48: Kreiselrechen
- 49: Kreiselrechen
- 50: Schwenkachse
- 51: Schwenkachse
- 52: Kreiselgetriebe
- 53: Kreiselgetriebe
- 54: Kreiselrechen
- 55: Kreiselrechen
- 56: Tragarm
- 57: Tragarm
- 58: Hydraulikzylinder
- 59: Schwenkachse
- 60: Schwenkachse
- 61: Hydraulikzylinder
- 62: Koppelstange
- 63: Bolzen
- 64: Führungsschlitz
- 65: Anschlagfläche
- 66: Anschlagfläche
- 67: Bolzen
- 68: Führungsschlitz
- 69: Anschlagfläche
- 70: Anschlagfläche
- F: Fahrtrichtung
- S: Schwenkrichtung

## Patentansprüche

1. Verfahren zum Schwenken von Kreiselrechen für Heuwerbungsmaschinen, die von einer breiten Arbeitsstellung in eine schmale Transportstellung veränderbar ist, mit einen etwa in Fahrtrichtung verlaufenden Längsträger und wenigstens einem quer zur Fahrtrichtung verlaufenden Querträger an dem sich beidseitig mehrere schwenkbeweglich miteinander verbundene Rechkreisel aufnehmende Tragarme anschließen, die sich in Arbeitsstellung quer zur Fahrtrichtung erstrecken und sich über Tasträder auf dem Erdboden abstützen, **dadurch gekennzeichnet, dass** zur Überführung der Heuwerbungsmaschine aus der Arbeits- in die Transportstellung die den mittleren Kreiselrechen (12,13) seitlich nach außen zugeordneten Kreiselrechen (18, 19, 28, 29, 40, 41, 48, 49, 54, 55) pro Seite aus mindestens fünf Kreiselrechen bestehend diese zunächst vom Boden abgehoben werden und das Verschwenken der zugehörigen Tragrahmen (10, 11, 30, 31, 36, 37, 46, 47, 56, 57) aus der Arbeitsstellung in die Transportstellung in der Weise erfolgt, dass die Tragarme schrittweise nach oben schwenkend von außen nach innen spiralförmig eingerollt werden und die spiralförmig eingerollten Schwadkreisel aufnehmenden Tragarme von der Arbeitsstellung in die Transportstellung um aufrechte etwa vertikale Schwenkachsen um etwa 90° nach vorn oder hinten geschwenkt werden.

2. Verfahren nach Anspruch 1, **dadurch gekennzeichnet, dass** der Querträger (7) und dessen Kreiselrechen (12,13,18, 19, 28, 29, 40, 41, 48, 49, 54, 55) mittels eines in der Arbeitsstellung hochgeklappten und in der Transportstellung heruntergeklappten Transportfahrwerks zur Überführung der Heuwerbungsmaschine in deren Transportstellung sich gegenüber dem Boden abstützend vom Boden abgehoben werden.

3. Vorrichtung zum Schwenken von Kreiselrechen für Heuwerbungsmaschinen, die von einer breiten Arbeitsstellung in eine schmale Transportstellung veränderbar ist, mit einen etwa in Fahrtrichtung verlaufenden Längsträger und wenigstens einem quer zur Fahrtrichtung verlaufenden Querträger an dem sich beidseitig mehrere schwenkbeweglich miteinander verbundene Rechkreisel aufnehmende Tragarme anschließen, die sich in Arbeitsstellung quer zur Fahrtrichtung erstrecken und sich über Tasträder auf dem Erdboden abstützen, **dadurch gekennzeichnet, dass** die den mittleren Kreiselrechen (12,13) seitlich nach außen zugeordneten Kreiselrechen (18, 19, 28, 29, 40, 41, 48, 49, 54, 55) pro Seite aus mindestens fünf Kreiselrechen bestehen und das Verschwenken der zugehörigen Tragrahmen (10, 11, 30, 31, 36, 37, 46, 47, 56, 57) aus der Arbeitsstellung in die Transportstellung in der Weise erfolgt, dass die Tragarme schrittweise nach oben schwenkend von außen nach innen spiralförmig eingerollt werden.

4. Vorrichtung nach Anspruch 3, **dadurch gekennzeichnet, dass** die spiralförmig eingerollten Schwadkreisel aufnehmenden Tragarme von der Arbeitsstellung in die Transportstellung um am Mittelrahmen angebrachte aufrechte etwa vertikale Schwenkachsen um etwa 90° nach vorn oder hinten schwenkbar sind.

5. Vorrichtung nach Anspruch 3, **dadurch gekennzeichnet, dass** die den mittleren Kreiselrechen (12,13) zugeordneten Seitenträger (10, 11) aufnehmende Kreiselrechen (28, 29, 40, 41, 48, 49, 54, 55) um die am Querrahmen (7) horizontal angeordnete Schwenkachse (16, 17) durch die Hydraulikzylinder (20) vom Erdboden angehoben werden.

6. Vorrichtung nach Anspruch 3 bis 5, **dadurch gekennzeichnet, dass** die für den Transport angehobenen Seitenträger (10, 11), gemeinsam mit den darauf aufgesattelten seitlichen Kreiselrechen (28, 29, 40, 41, 48, 49, 54, 55) um die am Querrahmen (7) aufrechten etwa vertikal gerichteten Schwenkachsen (8, 9) durch die am Längsträger (3) und an den Seitenträgern (10, 11) angeschlossenen Hydraulikzylindern (21), in ihre Transportstellung geschwenkt werden können.

7. Vorrichtung nach Anspruch 3 bis 6, **dadurch gekennzeichnet, dass** der Querträger (7) ein hoch- bzw. herunterklappbares Transportfahrwerks zur Überführung des Querträgers (7) und dessen Kreiselrechen (12,13,18, 19, 28, 29, 40, 41, 48, 49, 54, 55) in eine angehobene Transportstellung aufweist.
